# EUROPÄISCHE PATENTSCHRIFT

(11) **EP 0 855 244 B1**
(45) Veröffentlichungstag und Bekanntmachung des Hinweises auf die Patenterteilung: **29.01.2003**
(21) Anmeldenummer: 97118419.7
(22) Anmeldetag: 23.10.1997
(51) Int. Cl.: B23Q 11/00, B25D 17/20

(54) **Absaugeinrichtung für eine Handwerkzeugmaschine, insbesondere für eine Bohr- oder Schlagbohrmaschine**
Suction device for a hand-tool, in particular for a drill or a hammer-drill
Dispositif d'aspiration pour une machine-outil portable, en particulier pour une machine de forage ou une foreuse à percussion

(30) Priorität: 20.12.1996 DE 19653330
(43) Veröffentlichungstag der Anmeldung: 29.07.1998
(73) Patentinhaber: ROBERT BOSCH GMBH, 70442 Stuttgart (DE)
(72) Erfinder: Dehde, Joerg, 71144 Steinenbronn (DE); Kageler, Sven, 70771 Leinfelden-Echterdingen (DE); Meyen, Hans-Peter, Dr., 40202 Louisville, Kentucky (US); Acar, Sezsin, 71642 Ludwigsburg (DE); Bressler, Ulrich, 71254 Ditzingen (DE)

(56) Entgegenhaltungen:
- EP-A- 0 097 879
- BE-A- 705 382
- DE-A- 3 509 199
- DE-U- 9 418 453
- PATENT ABSTRACTS OF JAPAN vol. 004, no. 143 (M-035), 8. Oktober 1980 & JP 55 096208 A (OOI TAKUTO), 22. Juli 1980

## Beschreibung

### Stand der Technik

Die Erfindung geht aus von einer Absaugeinrichtung für eine Handwerkzeugmaschine nach dem Oberbegriff des Anspruchs 1. Es ist schon eine Absaugeinrichtung bekannt
(DE 41 42 497 A1), bei der abgetragenes Material mittels eines Absauggebläses abgesaugt wird. Die Absaugung erfolgt dabei über einen seitlich der Handwerkzeugmaschine zwischen Bearbeitungsstelle und Absauggebläse verlaufenden Absaugschlauch. Auf Grund der nicht geradlinigen Führung der Absaugleitung kann es unter Umständen zu einer Verstopfung in der Absaugleitung kommen. Darüber hinaus sind für die Absaugleitung zusätzliche Bauteile, wie z.B. Absaugglocke, Teleskoparm und Absaugschlauch, erforderlich, die an der Handwerkzeugmaschine befestigt werden müssen.

Eine Absaugeinrichtung mit den Merkmalen des Oberbegriffs des Anspruchs 1 ist aus der DE 94 18 453 U bekannt. Diese Absaugeinrichtung besitzt ein Absauggebläse zur Abfuhr von abgetragenem Material von einer Bearbeitungsstelle zu einem Sammelbehälter, wobei das Absauggebläse eine Absaugkammer aufweist, die ein Lüfterrad aufnimmt, das von einem Antriebsmotor der Handwerkzeugmaschine antreibbar ist. Die Absaugeinrichtung umfaßt wenigstens einen Absaugkanal, der sich innerhalb der Handwerkzeugmaschine in axialer Richtung an eine Absaugleitung in einem Werkzeug anschließt und der zumindest teilweise innerhalb einer Antriebsspindel der Handwerkzeugmaschine angeordnet ist, wobei das abgetragene Material über den Absaugkanal in die Absaugkammer und von dort weiter in den Sammelbehälter gelangt.

### Vorteile der Erfindung

Die erfindungsgemäße Absaugeinrichtung mit den Merkmalen des Anspruchs 1 hat demgegenüber den Vorteil, daß eine verbesserte Absaugung ermöglicht wird und zusätzliche Bauteile nicht erforderlich sind.

Durch die in den abhängigen Ansprüchen aufgeführten Maßnahmen sind vorteilhafte Weiterbildungen und Verbesserungen der erfindungsgemäßen Absaugeinrichtung möglich.

### Zeichnung

Ausführungsbeispiele der Erfindung sind in der Zeichnung dargestellt und in der nachfolgenden Beschreibung näher erläutert. Es zeigen Figur 1 eine schematische Darstellung einer Handwerkzeugmaschine mit Absaugeinrichtung, Figur 2 eine Darstellung des Eingangsbereichs eines Absaugkanals der Absaugeinrichtung, Figur 3 ein erstes Ausführungsbeispiel eines Einfallschutzes für den Absaugkanal und Figur 4 ein zweites Ausführungsbeispiel eines Einfallschutzes.

### Beschreibung der Ausführungsbeispiele

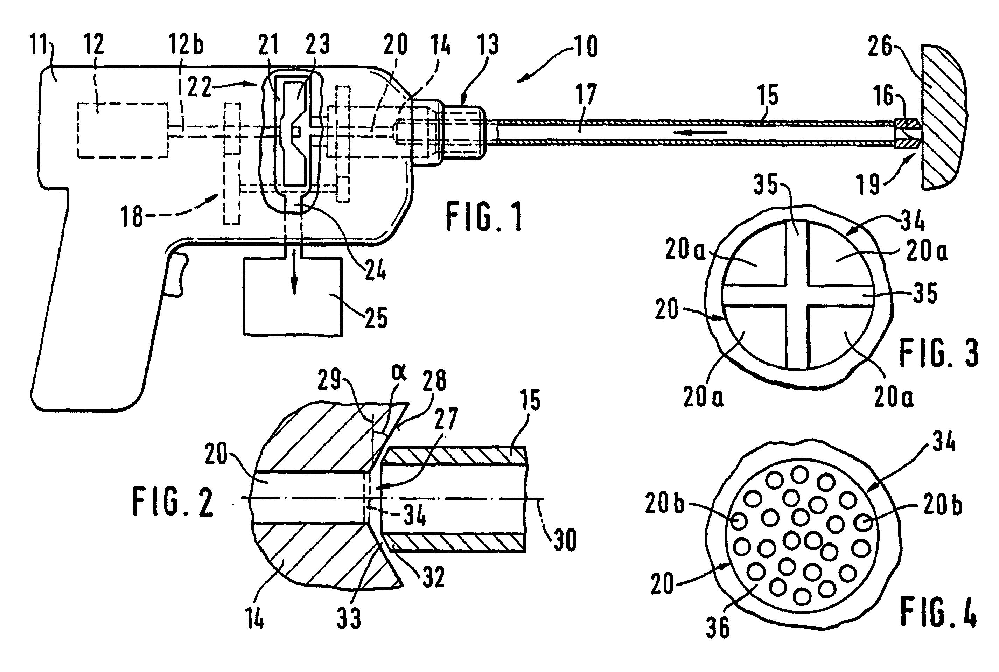

In Figur 1 ist mit 10 eine Bohrmaschine bezeichnet, die als Beispiel einer Handwerkzeugmaschine dient. Die Bohrmaschine 10 weist ein Gehäuse 11 auf, in dem ein Antriebsmotor 12 untergebracht ist. Mittels des Antriebsmotors 12 ist ein Werkzeughalter 13 über ein schematisch angedeutetes Getriebe 18 in bekannter Weise drehend antreibbar. In den Werkzeughalter 13 ist ein Schaft eines Absaugwerkzeugs 15 eingesetzt. Das Absaugwerkzeug 15 hat eine Schneidspitze 16 und bildet in seinem Innern über seine axiale Länge eine Absaugleitung 17. An die Absaugleitung 17 im Werkzeug 15 schließt sich innerhalb der Bohrmaschine 10 ein axialer Absaugkanal 20 an, der in eine Absaugkammer 21 eines Absauggebläses 22 einmündet. Das Absauggebläse 22 ist mit einem Lüfterrad 23 versehen, das über den Antriebsmotor 12 über eine Motorwelle 12b antreibbar ist. Die Absaugkammer 21 ist über einen Stutzen 24 mit einem Sammelbehälter 25 für das abgesaugte Material verbunden. Der Stutzen 24 ist radial zur Absaugkammer 21 angeordnet unddurchbricht das Gehäuse 11 der Bohrmaschine 10.

Im Betrieb der Bohrmaschine 10 wird das Werkzeug drehend und/oder schlagend angetrieben. Dabei wird mit der Schneidspitze 16 des Absaugwerkzeugs 15 Material von einem Werkstück 26, beispielsweise einer Mauer, abgetragen. Der Bereich um die Schneidspitze 16 bildet eine Bearbeitungsstelle 19. Das an der Bearbeitungsstelle 19 abgetragene Material wird durch die Saugkraft des Gebläses 22 über die Absaugleitung 17 und den Absaugkanal 20 zur Absaugkammer 21 transportiert und gelangt von dort radial über den Stutzen 24 in den Sammelbehälter 25.

Der Übergang zwischen Absaugleitung 17 und Absaugkanal 20 ist in Figur 2 näher dargestellt. Der werkzeugseitige Eingangsbereich 27 des Absaugkanals 20 ist trichterförmig ausgebildet. Dabei bildet eine stirnseitige Wandung 28 der Antriebsspindel 14 einen Winkel α zu einer Senkrechten 29 auf die Längsachse 30 des Absaugwerkzeuges 15. Das Absaugwerkzeug 15 ist an seinem Schaftende 32 entsprechend der Wandung 28 konisch ausgebildet. Die Wandung 28 bildet eine axiale Stützfläche für das Werkzeug 15, wenn es gegen das Werkstück 26 gepreßt wird. Die Auflagefläche zwischen Wandung 28 und Schaftende 32 wird mit zunehmendem Winkel a größer. so daß die Flächenpressung zwischen Werkzeug 15 und Antriebsspindel 14 mit zunehmendem Winkel α reduziert werden kann, was insbesondere dann von Vorteil ist, wenn die Antriebsspindel 14 auch schlagend, d.h. axial hin- und hergehend beaufschlagt ist.

Darüber hinaus läßt sich durch die konische Trichterform die Dichtwirkung der Wandung 28 und des Schaftendes 32 erhöhen, da ein zwischen Wandung 28 und Schaftende 32 gebildeter Ringspalt 33 eine mit dem Winkel a zunehmende Länge hat.

Außerdem hat die konische Ausbildung der Wandung 28 noch den Vorteil, daß das Schaftende 32 zentriert wird, wodurch nicht nur ein guter Rundlauf des Werkzeugs 15, sondern auch eine gute Dichtung durch gleichmäßiges Anliegen der Dichtflächen gewährleistet ist.

Im Eingangsbereich 27 zum Absaugkanal 20 kann ein Einfallschutz 34 vorgesehen sein, der das Eindringen zu großer Partikel in den Absaugkanal 20 und/oder eine axiale Abstützung für Werkzeuge mit gegenüber dem Durchmesser des Absaugkanals 20 kleinerem Schaftdurchmesser bildet.

In Figur 3 ist ein erstes Ausführungsbeispiel eines Einfallschutzes 34 dargestellt. Zwei zu einem Kreuz überlagerte Stege 35 vermindern den Öffnungsquerschnitt im Eingangsbereich 27 und belassen Restöffnungen 20a zum Absaugkanal 20. Alternativ können auch noch weitere Stege 35 oder auch nur ein Steg 35 vorgesehen sein. Es ist auch denkbar, einen Einfallschutz 34 durch einen einseitig in den Öffnungsquerschnitt des Ansaugkanals 20 ragenden Körper, z.B durch einen Stift, zu bilden.

In Figur 4 ist ein zweites Ausführungsbeispiel für einen Einfallschutz 34 dargestellt. Der Einfallschutz 34 besteht aus einer im Eingangsbereich 27 zum Absaugkanal 20 angeordneten plattenförmigen Scheibe 36, in der eine Vielzahl durchgehender Öffnungen 20b vorgesehen sind.

## Patentansprüche

1. Absaugeinrichtung für eine Handwerkzeugmaschine, insbesondere für eine Bohr- oder Schlagbohrmaschine, mit einem Absauggebläse (22) zur Abfuhr von abgetragenem Material von einer Bearbeitungsstelle (19) zu einem Sammelbehälter (25), wobei das Absauggebläse (22) eine Absaugkammer (21) aufweist, die ein Lüfterrad (23) aufnimmt, das von einem Antriebsmotor (12) der Handwerkzeugmaschine (10) antreibbar ist und die Absaugeinrichtung wenigstens einen Absaugkanal (20) umfaßt, der sich innerhalb der Handwerkzeugmaschine (10) in axialer Richtung an eine Absaugleitung (17) in einem Werkzeug (15) anschließt und der zumindest teilweise innerhalb einer Antriebsspindel (14) der Handwerkzeugmaschine angeordnet ist, wobei das abgetragene Material über den Absaugkanal (20) in die Absaugkammer (22) und von dort über einen Stutzen (24) weiter in den Sammelbehälter (25) gelangt, **dadurch gekennzeichnet, daß** der werkzeugseitige Eingangsbereich (27) des Absaugkanals (20) trichterförmig ausgebildet ist, indem eine Wandung (28) des werkzeugseitigen Eingangsbereichs (27) des Absaugkanals (20) einen Winkel (a) mit einer Senkrechten (29) auf eine Werkzeuglängsachse (30) einschließt.

2. Absaugeinrichtung nach Anspruch 1, **dadurch gekennzeichnet, daß** die Wandung (28) eine axiale Abstützung für ein Schaftende (32) des Werkzeugs (15) bildet.

3. Absaugeinrichtung nach Anspruch 1 oder 2, **dadurch gekennzeichnet, daß** im Eingangsbereich (27) des Absaugkanals (20) ein Einfallschutz (34) gegen Eindringen des Schaftendes (32) des Werkzeugs (15) in den Absaugkanal (20) vorgesehen ist.

4. Absaugeinrichtung nach Anspruch 3, **dadurch gekennzeichnet, daß** der Einfallschutz (34) durch ein Gitter mit wenigstens einem Steg (35) gebildet wird.

5. Absaugeinrichtung nach Anspruch 3, **dadurch gekennzeichnet, daß** der Einfallschutz (34) durch eine plattenförmige Scheibe (36) mit mehreren durchgehenden Öffnungen (20b) gebildet wird.

## Claims

1. Extraction arrangement for a powered hand tool, in particular for a drilling or percussion-drilling machine, having an extraction fan (22) for drawing off removed material from a machining point (19) to a collecting container (25), the extraction fan (22) having an extraction chamber (21) which accommodates a fan impeller (23), which can be driven by a drive motor (12) of the powered hand tool (10), and the extraction arrangement comprising at least one extraction passage (20) which, inside the powered hand tool (10), adjoins an extraction line (17) in a tool (15) in the axial direction and which is arranged at least partly inside a drive spindle (14) of the powered hand tool, the removed material passing via the extraction passage (20) into the extraction chamber (22) and further from there via a connection piece (24) into the collecting chamber (25), **characterized in that** the tool-side inlet region (27) of the extraction passage (20) is of funnel-shaped design by virtue of the fact that a wall (28) of the tool-side inlet region (27) of the extraction passage (20) encloses an angle (α) with a perpendicular (29) to a tool longitudinal axis (30).

2. Extraction arrangement according to Claim 1, **characterized in that** the wall (28) forms an axial support for a shank end (32) of the tool (15).

3. Extraction arrangement according to Claim 1 or 2, **characterized in that** an entry protector (34) to prevent the shank end (32) of the tool (15) from penetrating into the extraction passage (20) is provided in the inlet region (27) of the extraction passage (20).

4. Extraction arrangement according to Claim 3, **characterized in that** the entry protector (34) is formed by a grid having at least one web (35).

5. Extraction arrangement according to Claim 3, **characterized in that** the entry protector (34) is formed by a plate-shaped disc (36) having a plurality of through-openings (20b).

## Revendications

1. Installation d'aspiration pour une machine-outil portable notamment une perceuse ou perceuse à percussion comportant un aspirateur (22) pour évacuer la matière dégagée du point de travail (19) dans un collecteur (25),
l'aspirateur (22) ayant une chambre d'aspiration (21) recevant un rotor (23) entraîné par le moteur (12) de la machine (10) et l'installation d'aspiration comprenant au moins un canal d'aspiration (20) qui rejoint à l'intérieur de la machine (10), dans la direction axiale, une conduite d'aspiration (17) de l'outil (15) et qui se trouve au moins en partie dans la broche d'entraînement (14) de la machine,
la matière dégagée arrivant par le canal d'aspiration (20) dans la chambre d'aspiration (22) et de là par un ajutage (24) dans le collecteur (25),
**caractérisée en ce que**
la zone d'entrée (27) du canal d'aspiration (20) du côté de la machine est en forme d'entonnoir, la paroi (28) de la zone d'entrée (27) du canal d'aspiration (20) faisant un angle a par rapport à la direction (29) perpendiculaire à l'axe longitudinal (30) de l'outil.

2. Installation d'aspiration selon la revendication 1,
**caractérisée en ce que**
la paroi (28) constitue un appui axial pour l'extrémité (32) de l'outil (15).

3. Installation d'aspiration selon la revendication 1 ou 2,
**caractérisée en ce que**
dans la zone d'entrée (27) du canal d'aspiration (20) il est prévu une protection d'entrée (34) évitant que l'extrémité (32) de l'outil (30) ne s'enfonce dans le canal d'aspiration (20).

4. Installation d'aspiration selon la revendication 3,
**caractérisée en ce que**
le moyen de protection d'entrée (34) est formé par une grille avec au moins une entretoise (35).

5. Installation d'aspiration selon la revendication 3,
**caractérisée en ce que**
le moyen de protection d'entrée (34) est formé par un disque (36) en forme de plaque avec plusieurs orifices traversants (20b).
